# EUROPÄISCHE PATENTSCHRIFT

(11) **EP 0 958 335 B1**
(45) Veröffentlichungstag und Bekanntmachung des Hinweises auf die Patenterteilung: **16.05.2001**
(21) Anmeldenummer: 97929019.4
(22) Anmeldetag: 09.07.1997
(51) Int. Cl.: C10L 10/04, C10L 10/02, B01D 53/70, B01D 53/64, C10L 9/10, B01J 20/12

(54) **VERFAHREN ZUM VERHINDERN VON HOCHTEMPERATURKORROSION**
PROCESS FOR PREVENTING HIGH TEMPERATURE CORROSION
PROCEDE POUR EMPECHER LA CORROSION A HAUTE TEMPERATURE

(30) Priorität: 18.07.1996 AT 129496; 07.02.1997 AT 19497
(43) Veröffentlichungstag der Anmeldung: 24.11.1999
(73) Patentinhaber: ICA Chemie AG, 4132 Muttenz (CH)
(72) Erfinder: BIRKNER, Friedrich, A-3384 Gross Sierning Nr.33 (AT); BIRKNER, Maria-Katharina, A-3384 Gross Sierning Nr.33 (AT)
(74) Vertreter: Haffner, Thomas M., Dr.
(86) Internationale Anmeldenummer: AT9700158
(87) Internationale Veröffentlichungsnummer: WO9803616

(56) Entgegenhaltungen:
- EP-A- 0 479 350
- EP-A- 0 655 273
- DE-A- 2 944 989
- DE-A- 4 012 982
- DE-A- 4 021 362
- DE-B- 1 247 061
- FR-A- 2 019 604
- GB-A- 800 445
- GB-A- 939 938
- GB-A- 1 307 127
- US-A- 3 249 075

## Beschreibung

Die Erfindung bezieht sich auf ein Verfahren zum Verhindern von Hochtemperaturchlorkorrosion in Verbrennungsräumen von Feuerungs- und Müllverbrennungsanlagen und zur Verringerung des Flugstaubanteiles in den Verbrennungsabgasen.

Bekannte Korrosionsschutzverfahren versuchten die Korrosion in Verbrennungsanlagen und insbesondere an den Wärmetauscherflächen der Kessel dadurch herabzusetzen, daß in der Gasphase Umsetzungen zur Deaktivierung korrosiver Substanzen vorgenommen werden. Zu diesem Zweck wird in der Regel Magnesiumoxid eingedüst, wodurch vor allen Dingen eine Hochtemperatursulfatkorrosion bei Temperaturen von über 480° C wesentlich herabgesetzt werden kann. Dies wird dadurch erreicht, daß sich bei einem Überschuß von MgO in den Belägen, die sich zum Beispiel auf den Überhitzerrohren bilden, mit dem SO₂ des Rauchgases MgSO₄ bildet und nicht Alkalipyrosulfate. Alkalipyrosulfate lösen nämlich bei Temperaturen von über 480° C die Zunderschicht auf und führen zu katastrophalen Korrosionsschäden.

Gegenüber Korrosionsschäden, die durch aus der Sulfatisierung von Choriden entstehendes Chlor entstehen, ist MgO wirkungslos.

Diese Art von Korrosion tritt in den letzten Jahren vermehrt im Feuerraumbereich von Müllverbrennungsanlagen auf, da sich durch die Mülltrennung einerseits die Müllzusammensetzung geändert hat und andererseits durch gesetzliche Bestimmungen (mind. 2 sec 800° C im Feuerraum) eine höhere Rauchgastemperatur eingehalten werden muß.

Aus der WO 95/11287 ist bereits bekannt geworden, in den Brennraum Cerverbindungen wie Eisencer, Ceroxide und/oder Ceroxidhydrate in Pulverform einzudüsen. Derartige Cerverbindungen konnten gemäß diesem älteren Vorschlag gemeinsam mit Magnesiumoxid eingedüst werden und zielten in erster Linie darauf ab, den Reinigungsaufwand für das Ablösen von Belägen an der Innenseite von Anlagenteilen wesentlich herabzusetzen, und auf diese Weise eine längere Reisezeit als bei bekannten Verfahren zu ermöglichen. Insbesondere sollten hierbei passivierende Schichten, welche zum Schutz von Anlagenoberteilen oberflächlich bereits ausgebildet wurden, in ihrer Wirksamkeit erhalten werden und nicht mehr beeinträchtigt werden. Derartige Cerverbindungen wie Eisencer, Ceroxide oder Ceroxidhydrate sollten hierbei in der Nähe der Wände reduzierende Zonen sicherstellen, um auf diese Weise die Korrosion herabzusetzen. Die Wirkungsweise der Cerverbindungen nach Art von Oxidationskatalysatoren führt hierbei zu einer Nachverbrennung in reduzierenden Bereichen des Rauchgases, wodurch eine Reduktion einer zur Passivierung bereits ausgebildeten Oxidschicht von Zunder bzw. Rost mit Sicherheit vermieden wird. Die Cerverbindungen sollten hierbei auch gegen Chloridionenkorrosion wirksam werden, und auf diese Weise eine Oxidation zu prinzipiell ungefährlicherem Chlorgas in molekularer Form sicherstellen.

Der Einsatz derartiger Additive ist aber mit relativ hohen Kosten verbunden und hat sich insbesondere im Zusammenhang mit der Hochtemperaturchlorkorrosion, bei welcher Chlorgase wiederum dissoziieren, als nicht hinreichend wirksam erwiesen.

Versuche, Filterhilfsmittel und insbesondere anorganische Filterhilfsmittel auf der Basis von Silanolgruppen enthaltender aktiver Kieselsäure dem zu verbrennenden Einsatzmaterial zuzumischen, haben sich gleichfalls als relativ aufwendig herausgestellt, da wegen der inhomogenen Verteilung im Müll Zusätze erst im Prozentbereich Wirkung zeigen.

Für die Rückführung von schadstoffbeladenen Rückständen wie beispielsweise Filteraschen, Adsorbentien od.dgl. in den Kreislauf einer Schmelzkammerfeuerung mit Zusatz von Altglas und/oder Kalksplitt wurde bereits in der DE-A-4 021 362, vorgeschlagen, den Absorber in den Kreislauf einer Schmelzkammerfeuerung mit vollständiger Ascheruckfuhrung einzubringen. Der Absorber kann dabei in den Rauchgasweg und/oder in die Ascherückführung und oder in den Schlackeabzug und/oder mit der Kohle eingespeist werden, wobei Altglasscherben und/oder Kalksplitt zudosiert werden können.

Der GB-A-1 307 127 ist der Einsatz von 85 Gew.% Kalziumbentonit, 10 Gew.% Natriumphosphat und 5 Gew.% Natriumborat in Öl-, Gas- und Kohlefeuerungen als bekannt zu entnehmen. In der US-A-3 249 075 wird zur Reduktion der SO₃-Korrosion das Einbringen von Antimonverbindungen und Silikaten mit großer spezifischer Oberfläche im Überhitzerbereich von kohlegefeuerten Kesseln vorgeschlagen.

Schließlich wird in der GB-A-800 445 der Vorschlag gemacht, gebrannten Bentonit und andere Feuerfestmaterialien zur besseren Verteilung von Öltropfen in Gasturbinen einzusetzen.

Die Erfindung zielt nun darauf ab, ein Verfahren der eingangs genannten Art zu schaffen, bei welchem auch geringste Mengen eines Additivs zum Einsatz gelangen können, wobei Alkali und der Gehalt an Metallchloriden im Rauchgas so rasch wie möglich reduziert werden kann. Die Reaktion soll hierbei möglichst rasch einsetzen und auch bei hohen Temperaturen stattfinden, ohne daß elementares Chlor freigesetzt wird.

Zur Lösung dieser Aufgabe besteht das erfindungsgemäße Verfahren zum Verringern der Hochtemperaturchlorkorrosion in Feuerungs- und Verbrennungsanlagen, bei welchem Additive in den Gasraum eingedüst werden, im wesentlichen darin, daß sauer aktivierter Bentonit in den Gasraum bei Gastemperaturen über 750° C, vorzugsweise 800°C, eingedüst wird. Aufgrund der hohen Reaktivität von sauer aktiviertem Bentonit gelingt es auch bei relativ hohen Temperaturen bereits, die gewünschte Umsetzung zur Abbindung von Alkalien vorzunehmen, wobei die gewünschten Reaktionen auch bei Temperaturen von über 900° C bereits rasch und quantitativ ablaufen. Eine sehr frühzeitige Abbindung von Alkalien gelingt daher, wenn das Additiv knapp über der Brennerebene oder dem Rost, beispielsweise in der Ebene der Sekundarluftzufuhrung gemeinsam mit Sekundärluft eingedüst wird, sodaß die Wegstrecke, über welche ein korrosiver Angriff uberhaupt möglich ist, wesentlich herabgesetzt werden kann. Zur besseren Verteilung des sauer aktivierten Bentonits kann dieser ggf. gemeinsam mit Siliziumdioxid eingedüst werden, wobei SiO₂ hier in erster Linie als Verdünnungsmittel wirksam wird. In jedem Fall soll in Gemischen mit SiO₂ sauer aktivierter Bentonit in einer Menge von mehr als 50 Gew% bezogen auf die Mischung eingesetzt werden, um die gewünschte Reaktion rasch sicherzustellen.

Durch das Eindüsen von Glasstaub kann sichergestellt werden, daß der Glasstaub bzw. das Glasmehl rasch vollständig aufschmilzt, wobei ein effektiver Schutz der gegen Korrosion zu schützenden Kesselwände dadurch verbessert werden kann, daß der Glasstaub bzw. das Glasmehl über gerichtete Düsen oder Sprühteller in Richtung der Wände des Gasraumes eingebracht wird. Auf diese Weise wird eine spülende Strömung der Glasschmelze längs der Wände des Gasraumes sichergestellt.

Erfindungsgemäß wird mit Vorteil Glasstaub bzw. Glasmehl in Mengen von 0,3 kg/t bis 30 kg/t Müll in den Gasraum eingedüst, wobei in einfacher Weise gemahlenes Altglas, wie z.B. Fensterglas bzw. Flaschenglas, eingesetzt werden kann. Für das erfindungsgemäße Verfahren wird mit Vorteil ein auf Korngrößen etwa 50 µm vermahlenes Glas eingesetzt.

Mit Vorteil wird so vorgegangen, daß sauer aktivierter Bentonit ggf. mit SiO₂ vermengt in Mengen von 0,5 bis 3,0 kg/t Müll in Müllverbrennungsanlagen eingedüst wird.

Eine besonders wirtschaftliche Verfahrensführung unter weiterer Verringerung von Schadstoffemissionen läßt sich dadurch erzielen, daß sauer aktivierter Bentonit zum Adsorbieren von Schadstoffen, wie Hg oder Dioxin in den gekühlten Abgasen von Verbrennungsanlagen, insbesondere in einem Flugstromverrahren eingesetzt wird und nachfolgend in den Verbrennungsraum eingedust wird.

Aufgrund der im Feuerraum vorherrschenden Bedingungen wird bei dem heute üblicherweise in Müll vorherrschenden hohen Chlorgehalt in nicht unerheblicher Menge Alkalichlorid gebildet. Das Verhältnis zwischen Chlor und Schwefel hat sich bei Müll in den letzten Jahren im Rauchgas zugunsten von Chlor verschoben, wobei vermehrte Mengen an Metallchloriden unzersetzt ins Rauchgas gelangen und erst dort oder in den Belägen in Sulfate umgewandelt werden. Unter den gegebenen thermodynamischen Bedingungen führt diese Umsetzung, welche auch *Sulfatisierungsreaktion* genannt wird, zu Natriumsulfat und elementarem Chlor, und damit zu einem starken korrosiven Angriff. Das Chlor gelangt bis an die Rohroberfläche und kann dort Stahl unter Bildung von Eisenchlorid zerstören. Diese Sulfatisierungsreaktion ist in erster Linie im Feuerraum hinter und knapp über der Ausmauerung zu beobachten, und durch die erfindungsgemäße Eindüsung von sauer aktiviertem Bentonit gelingt es, den Gehalt an Metallchloriden überaus rasch zu reduzieren. Vorschläge, zu diesem Zweck Schwefel ins Rauchgas einzudüsen, führen zwar zu einer Beschleunigung der Sulfatisierung der Chloride, wobei die Sulfatisierung allerdings erst bei tieferen Temperaturen stattfindet, und die Menge an freigesetztem Chlor gleichbleibt. Das sauer aktivierte Bentonit ist aufgrund seiner chemischen und physikalischen Eigenschaften in der Lage, mit Alkaliverbindungen im Rauchgas überaus rasch auch bei höheren Temperaturen, insbesondere bei Temperaturen von über 900° C bereits zu reagieren, wobei Alkali abgebunden werden kann und HCl gebildet wird. Es wird somit kein elementares Chlor freigesetzt, wodurch die Gefahr der Hochtemperaturchlorkorrosion wesentlich herabgesetzt wird.

Ein kostengünstiges und einfaches zusätzlich verwendbares Additiv zum Eindusen in Verbrennungsraume von Feuerungs- und Müllverbrennungsanlagen, mit welchen die Reisezeit von Kessein wesentlich erhöht werden kann und welches gleichzeitig darauf abzielt, den bei den bekannten Additiven immer noch relativ hohen Flugstaubanteil im Abgas drastisch zu verringern, wurde erfindungsgemaß aus Oxidschmelzen, insbesondere Glasmehl bzw. Glasstaub mit einem Schmelzpunkt von unter 1000° C gewonnen. Glasmehl bzw. Glasstaub, welches bevorzugt im Gegenstrom zu den Rauchgasen eingedüst wird, schmilzt hiebei bei den Temperaturen in den Verbrennungsräumen auf, wobei Flugstaub zu nicht wasserlöslichen Glasen gebunden wird. Gleichzeitig wird überraschenderweise in derartige aufschmelzende Glasmehl- bzw. Glasstaubpartikel auch Alkali rasch abgebunden, wobei überraschenderweise auch ein rasches Absinken des Chlorgehaltes in den Abgasen festgestellt wurde. Alle diese korrosiven Bestandteile der Verbrennungsabgase werden somit von den schmelzenden Glasmehl- bzw. Glasstaubpartikeln effektiv abgebunden, wobei zu allem Überfluß der Vorteil erzielt wird, daß die Schmelze an der Wand der Kesseln einen dichten und einen korrosiven Angriff verhindernden Belag bildet, welcher als flüssiger Schmelzfilm längst der Wände in Richtung zur Schlacke abfließt. Eine derartige Spülung der Kesselwände durch die schmelzflüssige Glasschmelze hat somit neben der korrosionsvermindernden Wirkung auf die zu schützenden Kesselwände den Vorteil, daß eine Reihe von Schadstoffen mit der abwärts fließenden Schmelze effektiv ausgetragen werden können. Dieses zusätzliche Additiv kann gemeinsam mit sauer aktiviertem Bentonit eingedüst werden, wodurch sich die Effekte sogar über die Summe der Einzeleffekte verbessern lassen.

Mit Vorteil wird hiebei Glasmehl bzw. Glasstaub mit einem Schmelzpunkt von unter 800° C eingesetzt, wobei ein vollständiges Aufschmelzen und ein sicherer Abtransport der in der Schmelze gelösten Schadstoffe dadurch sichergestellt werden kann, daß das Glasmehl bzw. der Glasstaub eine mittlere Korngroße von 30 bis 60 µm, vorzugsweise von 40 µm, aufweist.

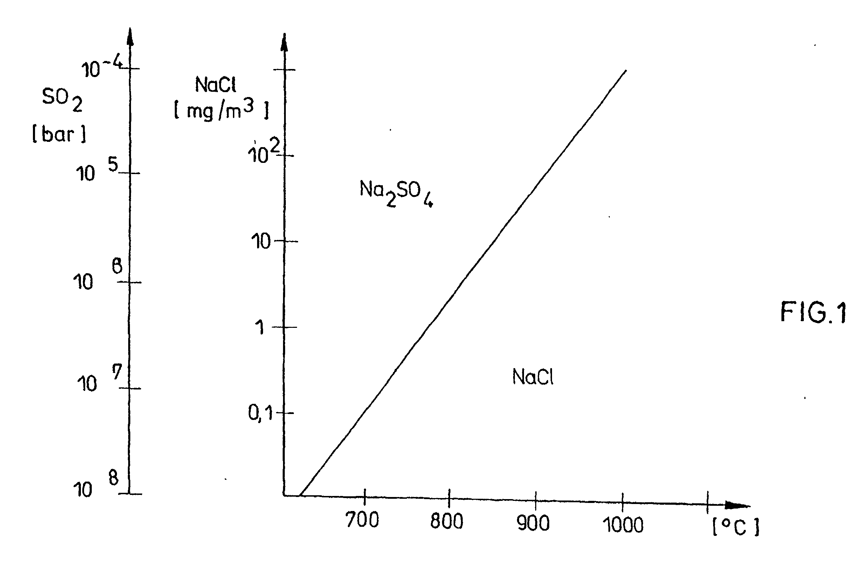

Die Erfindung wird nachfolgend anhand von zwei Diagrammen näher erläutert. In Fig. 1 der Zeichnung ist die Menge an Natriumchlorid sowie der SO₂-Gleichgewichtspartialdruck über die Temperatur für die nachfolgenden Feuerraumbedingungen dargestellt. pCO2 = 0,2 bar, pH₂O = 0,2 bar, pO2 = 0,05 bar, pHCl = 10⁻⁵ bar und pCl = 10⁻⁵ bar. Aus dieser Darstellung nach Fig. 1 ist ersichtlich, daß insbesondere im Hochtemperaturbereich die Bildung von Natriumchlorid im Feuerraum vorherrscht, und es wird daher darauf abgezielt, Natriumchlorid bereits bei hohen Temperaturen aus dem Rauchgas zu eliminieren.

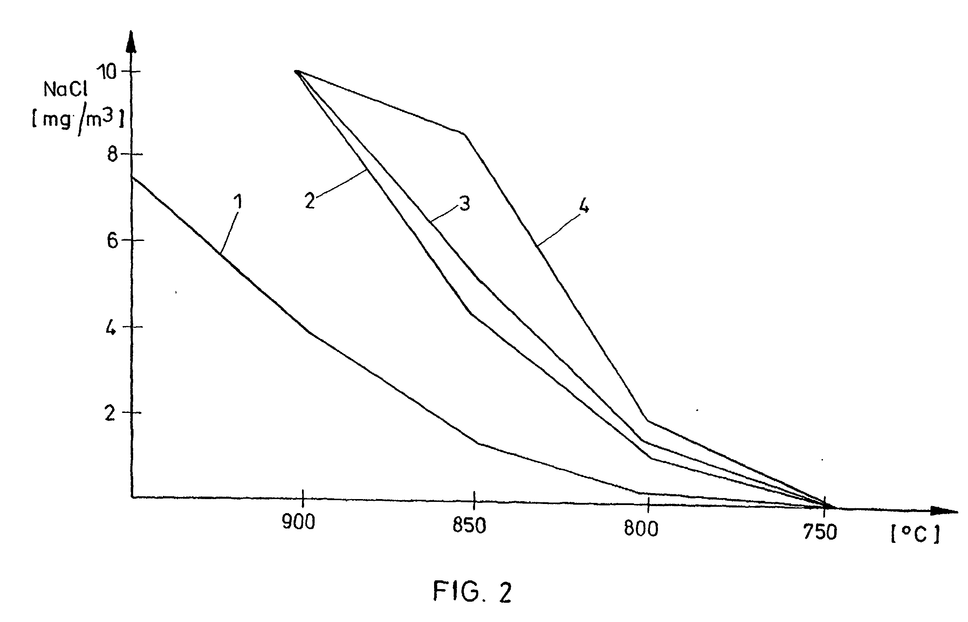

In Fig.2 ist die Menge Natriumchlorid im mg/m³ über die Temperatur dargestellt. Die Kurve 1 zeigt hierbei die erzielbare Absenkung durch Eindüsen von 1 kg sauer aktiviertem Bentonit je t Müll. Die Kurve 2 zeigt den Effekt, welcher mit dem Eindüsen von 2 kg Schwefel erzielbar wäre, sodaß klar die Überlegenheit des Eindüsens von sauer aktiviertem Bentonit zum Zwecke der Herabsetzung des Natriumchloridanteiles bei hohen Temperaturen ersichtlich ist. Kurve 3 verdeutlicht die Wirkung, wenn hingegen lediglich 1 kg Schwefel eingedüst wird, und Kurve 4 die Wirkung bei reinem Rauchgas.

Das Additiv ist pulverförmig und kann ohne weiteres in einer Mahlfeinheit hergestellt werden, die es erlaubt, das Additiv direkt über die Sekundärluft in den Feuerraum einzudüsen.

Bei gleichzeitigem Eindüsen von Glas wurde eine korrosionsbeständige Auskleidung der Kessel gebildet und der Schadstoffausstoß verringert, wobei die Lebensdauer auch der dem Feuerungsraum nachgeschalteten Einrichtung, wie Überhitzer od.dgl, verbessert wurde.

## Patentansprüche

1. Verfahren zum Verhindern von Hochtemperaturkorrosion und zur Verringerung des Flugstaubanteiles in den Verbrennungsabgasen in Feuerungs- und Müllverbrennungsanlagen, dadurch gekennzeichnet, daß sauer aktivierter Bentonit in den Gasraum bei Gastemperaturen über 750° C, vorzugsweise 800° C, eingedüst wird.

2. Verfahren nach Anspruch 1, dadurch gekennzeichnet, daß sauer aktivierter Bentonit in Gemischen mit SiO₂ eingedüst wird, wobei der Anteil an sauer aktiviertem Bentonit größer als 50 Gew.%, bezogen auf die Mischung, ist.

3. Verfahren nach Anspruch 1 oder 2, dadurch gekennzeichnet, daß sauer aktivierter Bentonit ggf. mit SiO₂ vermengt in Mengen von 0,5 bis 3,0 kg/t Müll in Müllverbrennungsanlagen eingedüst wird.

4. Verfahren nach einem der Ansprüche 1, 2 oder 3, dadurch gekennzeichnet, daß als SiO₂-Bestandteil gemahlenes Altglas, wie z.B. Fensterglas bzw. Flaschenglas, eingesetzt wird.

5. Verfahren nach einem der Ansprüche 1 bis 4, dadurch gekennzeichnet, daß sauer aktivierter Bentonit zum Adsorbieren von Schadstoffen, wie Hg oder Dioxin in den gekühlten Abgasen von Verbrennungsanlagen, insbesondere in einem Flugstromverfahren eingesetzt wird und nachfolgend in den Verbrennungsraum eingedüst wird.düst wird.

## Claims

1. A method for preventing high-temperature corrosion and reducing the portion of flue dust contained in the combustion flue gases of furnace arrangements and waste incineration plants, characterized in that acidically activated bentonite is nozzled into the gas space at gas temperatures of above 750°C, preferably 800°C.

2. A method according to claim 1, characterized in that acidically activated bentonite is nozzled in in a mixture with SiO₂, the portion of said acidically activated bentonite being larger than 50 wt.-%, based on said mixture.

3. A method according to claim 1 or 2, characterized in that acidically activated bentonite optionally mixed with SiO₂ is nozzled into waste incineration plants in amounts of from 0.5 to 3.0 kg/ton waste.

4. A method according to claim 1, 2 or 3, characterized in that ground glass wastes such as, e.g., window glass or bottle glass wastes are used as said SiO₂ component.

5. A method according to any one of claims 1 to 4, characterized in that acidically activated bentonite is used for adsorbing noxious substances such as Hg or dioxin contained in the cooled flue gases of combustion plants, in particular by way of a flue flow process, and subsequently is nozzled into the combustion space.

## Revendications

1. Procédé pour empêcher la corrosion à haute température et pour la diminution de la proportion de cendres volantes dans les gaz d'échappement de combustion dans les installations de chauffage et de brûlage d'ordures, caractérisé en ce que l'on injecte de la bentonite activée acide dans la chambre des gaz à des températures de gaz supérieures à 750°C, de préférence à 800°C.

2. Procédé selon la revendication 1, caractérisé en ce qu'on injecte de la bentonite activée acide en mélanges avec SiO₂, dans lequel la proportion de bentonite activée acide est supérieure à 50% en poids, par rapport au mélange.

3. Procédé selon la revendication 1 ou 2, caractérisé en ce qu'on injecte de la bentonite activée acide mélangée éventuellement avec SiO₂ en quantités de 0,5 à 3,0 kg/t d'ordures dans des installations de brûlage d'ordures.

4. Procédé selon l'une des revendications 1, 2 ou 3, caractérisé en ce qu'on utilise comme constituant SiO₂ du verre de récupération broyé, comme par exemple du verre à vitre ou du verre de bouteilles.

5. Procédé selon l'une des revendications 1 à 4, caractérisé en ce que la bentonite activée acide est utilisée pour l'adsorption de matières nuisibles, comme Hg ou la dioxine dans les gaz d'échappement refroidis d'installations de combustion, en particulier dans un procédé à courant d'air et est ensuite injectée dans la chambre de combustion.
